(19)

Europäisches
Patentamt
European
Patent Office
Office européen
des brevets

(11) **EP 1 843 127 A2**

(12) **EUROPEAN PATENT APPLICATION**

(43) Date of publication:
**10.10.2007 Bulletin 2007/41**

(51) Int Cl.:
***G01C 5/06*** (2006.01)

(21) Application number: **07105651.9**

(22) Date of filing: **04.04.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **05.04.2006 US 398955**

(71) Applicant: **Honeywell International, Inc.
Morristown, New Jersey 07962 (US)**

(72) Inventors:
- **Johnson, Steve C.
  Issaquah, WA 98029 (US)**
- **Ishihara, Yasuo
  Kirkland, WA 98034 (US)**
- **Bateman, Charles D.
  Bellevue, WA 98008 (US)**

(74) Representative: **Haley, Stephen
Gill Jennings & Every LLP
Broadgate House
7 Eldon Street
London EC2M 7LH (GB)**

(54) **Systems and methods for monitoring an altitude in a flight vehicle**

(57)    Systems and methods for monitoring an altitude in a flight vehicle are disclosed. In an embodiment, a system includes a barometric altimeter system operable to determine an altitude of the flight vehicle relative to a pressure datum that is adjustably selectable, and at least one altitude determination system that is operable to determine an altitude of the flight vehicle without reference to the selected pressure datum. A processor is coupled to the barometric altimeter system and to the at least one altitude determination system that is operable to receive altitude information from the barometric altimeter system and the at least one altitude determination system to compare the respective altitude information and determine if an altitude discrepancy exists.

FIG.1

**Description**

Flight vehicles, such as rotary and fixed wing aircraft, must be navigated in three dimensions. Accordingly, flight vehicles are equipped with various indicating instruments that permit an operator of the flight vehicle to monitor the movements of the flight vehicle with respect to each dimension. In particular, a barometric altimeter is often provided to permit the operator to determine an altitude for the flight vehicle relative to a predetermined pressure datum. In general, the barometric altimeter relates a static pressure measured at an elevation of the flight vehicle to an accepted atmospheric model (*e.g.*, the International Standard Atmosphere, or ISA) and displays a corresponding altitude on a face of the instrument. The barometric altimeter also generally includes an adjustable subscale that is configured to permit the operator to select a pressure level from which the altitude will be measured. For flight operations within the United States (and below 18,000 feet, MSL), the corresponding pressure level generally corresponds to an elevation of a known and selected airport elevation. In order to accommodate altimeter variations that are not automatically compensated (e.g., density errors), a vertical error budget (VEB) is generally established to assure that the flight vehicle maintains sufficient vertical separation from other flight vehicles, while also maintaining sufficient separation from surrounding terrain when the flight vehicle performs an approach procedure.

One problem associated with barometric altimetry is that the operator may enter an incorrect pressure level value on the subscale of the altimeter that is outside the VEB. Accordingly, the altimeter provides incorrect altitude information to the operator, which may adversely affect the safety of flight, particularly in cases where the deviation from the correct value is relatively large. For example, if a flight vehicle descends from 23,000 feet (MSL) to an airport having an elevation of 600 feet and a local altimeter setting of 30. 10 inches of mercury (in. Hg), and the operator neglects to reset the altimeter from 29.92 in Hg to 30.10 in. Hg when descending through 18,000 feet (MSL), the altimeter will provide an indication that is approximately 180 feet too low as the flight vehicle approaches the underlying terrain. In flight conditions having restricted visibility, an error of this magnitude may have tragic consequences.

This problem is particularly acute when the flight vehicle executes an approach procedure where ground-based vertical navigation information (*e.g.,* a glideslope component of an Instrument Landing System (ILS)) is not available to the operator, so that successful vertical navigation (VNAV) is principally dependent on altitude values displayed on the altimeter. Such approaches may include non-precision approaches such as Non-Directional Beacon (NDB) approaches, VHF Omni Range (VOR) approaches, and Area Navigation (RNAV) approaches including Required Navigation Procedure (RNP) approaches.

It would therefore be desirable to provide systems and methods that permit altimetry errors to be readily detected by the operator of the flight vehicle, thus enhancing the safety of flight.

The present invention includes systems and methods for monitoring an altitude in a flight vehicle. In one aspect, a system includes a barometric altimeter system operable to determine an altitude of the flight vehicle relative to a pressure datum that is adjustably selectable, and at least one altitude determination system that is operable to determine an altitude of the flight vehicle without reference to the selected pressure datum. A processor is coupled to the barometric altimeter system and to the at least one altitude determination system that is operable to receive altitude information from the barometric altimeter system and the at least one altitude determination system to compare the respective altitude information and determine if an altitude discrepancy exists.

IN THE DRAWINGS:

Embodiments of the present invention are described in detail below with reference to the following drawings.

FIGURE 1 is a block diagrammatic view of a system for monitoring an altitude in a flight vehicle, according to an embodiment of the invention;

FIGURE 2 is a block diagrammatic view of the altitude monitoring processor of FIGURE 1, according to an embodiment of the invention; and

FIGURE 3 is a flowchart that describes a method of monitoring an altitude of a flight vehicle, according to another embodiment of the invention.

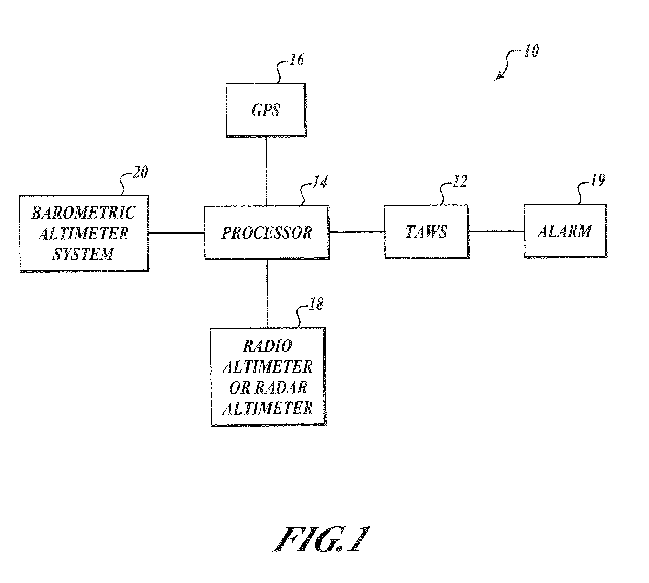

The present invention relates to systems and methods for monitoring an altitude of a flight vehicle. Many specific details of certain embodiments of the invention are set forth in the following description and in FIGURES 1 through 3 to provide a thorough understanding of such embodiments. One skilled in the art, however, will understand that the present invention may have additional embodiments, or that the present invention may be practiced without several of the details described in the following description. In the discussion that follows, it is understood that the term "flight vehicle" may apply to various aircraft known in the art, such as manned fixed and rotary wing aircraft, or even unmanned flight vehicles.

FIGURE 1 is a block diagrammatic view of a system 10 for monitoring an altitude in a flight vehicle, according to an embodiment of the invention. The system 10 includes a Terrain Awareness and Warning System (TAWS) 12. Briefly, and in general terms, the TAWS 12 is configured to provide an operator of a flight vehicle with increased situational awareness so that the safety of flight is enhanced. In particular, the TAWS 12 is effective in reducing the possibility of accidents associated with controlled flight into terrain or obstacles. Accordingly, the TAWS 12 obtains aircraft-related information such as flight vehicle information obtained from various sensor systems and an intended flight path, which may be obtained from a Flight Management System (FMS) or other sources, and combines the aircraft-related information with one or more terrain databases to provide at least one look ahead envelope that provides an alarm signal when the look ahead envelope intersects a terrain or obstacle feature. The alarm signal may then be transferred to an alarm module 19 that is configured to generate a suitable audible and/or visual alarm signal. Since the alarm signal will be generated well before the terrain feature is encountered, the TAWS 12 provides a sufficient response time to the operators of the flight vehicle so that an evasive maneuver may be performed. One example of a TAWS 12 is the Enhanced Ground Proximity Warning System (EGPWS), available from Honeywell, Inc. of Redmond, Washington, although other alternatives exist.

The system 10 also includes an altitude monitoring processor 14 that is operably coupled to the TAWS 12 and configured to execute various algorithms to detect errors associated with an altimeter setting, and to generate an alarm signal in response to the detected error. The various algorithms will be discussed in greater detail below. Although the altitude monitoring processor 14 is shown in FIGURE 1 as a separate unit, it is understood that the processor 14 may be incorporated into the TAWS 12 without significant alteration. The altitude monitoring processor 14 is also operably coupled to a global positioning system (GPS) receiver 16 that is configured to provide geographical positioning and/or navigational information to the processor 14. In particular, the GPS receiver 16 is configured to provide vertical navigation (VNAV) information to the processor 14, including an altitude of the flight vehicle relative to mean sea level (MSL).

Still referring to FIGURE 1, the system 10 also includes various other known systems for determining an altitude of the flight vehicle, such as a radio altimeter system 18 that is configured to determine an altitude (AGL) of the flight vehicle. The radio altimeter system 18 determines the altitude by projecting radio frequency (RF) energy from the flight vehicle downwardly towards the underlying terrain and receiving reflected RF energy. The altitude is thus determined by measuring a time-of-flight for the projected and reflected RF energy. One suitable radio altimeter system is the LRA-900 radio altimeter system, available from Rockwell Collins, Inc. of Cedar Rapids, Iowa, although other suitable alternatives exist. The system 10 also includes a barometric altimetry system 20 operably coupled to the system 10. In general, the system 20 includes one or more velocity sensors (e.g., pitot tubes), static pressure sensors, and total air temperature sensors that cooperatively determine a flight velocity, a Mach number, a total air temperature, or other known air data quantities. The system 20 may also include one or more air data computers (ADC) that are operable to receive information from the velocity sensors, static pressure sensors, and total air temperature sensors and to process the information to produce a corrected barometric altitude, a true airspeed, the Mach number and the total air temperature, as well as other known output values, which may be communicated to still other flight systems, such as a flight director system, an autopilot system and a Flight Management Computer (FMC). One suitable ADC is the AZ-252 advanced ADC, available from Honeywell, Inc. of Redmond Washington, although other suitable alternatives exist.

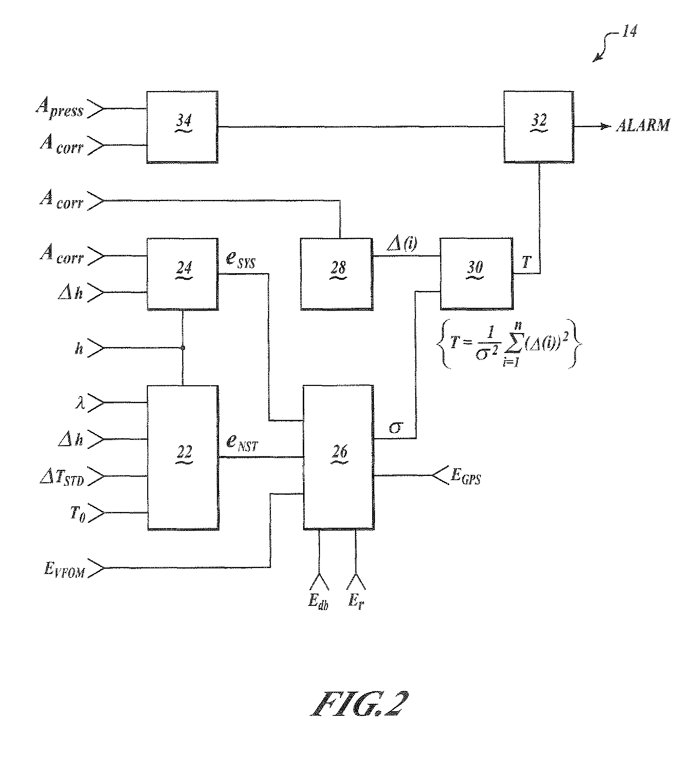

Turning now to FIGURE 2, the altitude monitoring processor 14 of FIGURE 1 will now be discussed in detail. The monitoring processor 14 includes a plurality of modules that execute various computational algorithms. It is understood that the various modules, which will be discussed in detail below, may be implemented using various devices (*e.g.,* hardware) that are configured to perform the required arithmetic and logical functions. Alternately, the required arithmetic and logical functions may be implemented through programmed instructions (e.g., software) provided to a general-purpose processing device operable to execute the programmed instructions. It is further understood that the foregoing modules may also be implemented using software and hardware in any combination.

The processor 14 includes a temperature error module 22 that is operable to compute a temperature-induced error for the barometric altitude that results from a non-standard air temperature. Accordingly, the module 22 is configured to execute the following expression for an induced temperature error associated with the barometric altitude:

$$E_{nst} = (\Delta h \times \Delta T_{std})/(T_0 + \Delta T_{std} - (h + \Delta h) \times \lambda)$$

$$(1)$$

Where h corresponds to an elevation (MSL) of a selected reporting station; $\Delta h$ corresponds to a distance between the flight vehicle and the elevation of the selected reporting station. Temperature variations are included in equation (1) by providing a difference $\Delta T_{std}$ between a temperature of the selected reporting station and the ISA sea level temperature $T_0$. In addition, the standard temperature lapse rate is specified in equation (1) by providing an accepted value for $\lambda$. Equation (1) generally provides for an error that ranges between zero at ISA Standard Day conditions, to approximately 480 feet for a Standard Day +/- 30 deg. C at 5000 feet above the reporting station. Although equation (1) generally comports with barometric altitude error estimations as provided by the International Civil Aeronautics Agency (ICAO), other induced temperature error estimations may also be used.

Altimetry system installation errors that include residual errors in the altitude measurement system, as well as other associated effects, are determined in a system error module 24. The module 24 is operable to execute the following expression:

$$E_{sys} = C_1 \times (h + \Delta h)^2 + C_2 \times (h + \Delta h) + C_3$$

$$(2)$$

The constants $C_1$, $C_2$ and $C_3$ in equation (2) are generally determined from flight test data for a particular flight vehicle. The magnitude of the system installation error provided by equation (2) typically ranges from approximately 50 feet at sea level to 170 feet at 41,000 feet. Although the module 22 and the module 24 address altitude errors associated with a non-standard temperature and installation errors, other error sources may be present, and may be addressed by still other modules not shown in FIGURE 2. For example, errors resulting from temperature inversions, or from large pressure gradients stemming from rapidly changing pressure fronts may also have significant effects on an estimated altitude. Accordingly, modules may also be included in the processor 14 to accommodate these effects.

Still referring to FIGURE 2, the processor 4 also includes an assumed error module 26 that is operable to calculate errors associated with other altitude determination systems. An error associated with the radio altimeter system 18 of FIGURE 1 may be determined by means of the following expression:

$$E_r = C_6 + C_7 \times A_r$$

$$(3)$$

In the foregoing expression, $A_r$ is the altitude determined by the radio altimeter, and the constants $C_6$ and $C_7$ are experimentally determined. For example, $C_6$ is typically about 25, while $C_7$ is typically about 0.02. An error associated with an altitude determined from the GPS receiver 16 (FIGURE 1) is determined by the following expression:

$$E_{gps} = C_8 \times E_{vfom} + C_9 \times E_{geoid}$$

$$(4)$$

In equation (4), $E_{vfom}$ represents a vertical figure of merit associated with the GPS receiver 16, while $E_{geoid}$ accounts for errors associated with converting from the World Geodetic System (1984) (WGS-84) ellipsoidal heights to the mean sea level (MSL) values. The constants $C_8$ and $C_9$ are generally experimentally determined. Typically, values for the constants $C_8$ and $C_9$ are approximately about 1.5 and 3, respectively.

Errors stemming from the database portion of the TAWS 12 (FIGURE 1) may be expressed as follows:

$$E_{db} = C_{10} + C_{11} \times (E_{std\ dev})$$

$$(5)$$

In equation (5), $C_{10}$ and $C_{11}$ are constants, and $E_{std\ dev}$ accounts for the terrain resolution in the terrain database. The $E_{std\ dev}$ may be computed by sampling cells of predetermined size that surround the location and altitude of the flight vehicle, and computing the standard deviation of the cells. In a selected embodiment, the number of cells sampled is at least about nine, although fewer than nine, or greater than nine cells may be used. The constants $C_{10}$ and $C_{11}$ are approximately about 50, and approximately about three, respectively.

The assumed error module is also operable to compute standard deviation values ($\sigma$) based upon the values generated by the expressions (1) through (5) above. Accordingly, a standard deviation based upon a GPS-based altitude deviation may be expressed by:

$$\sigma_{gps}=\mid E_{nst}\mid + [E_{sys}^2 + E_{atis}^2 + E_{gps}^2]^{1/2}$$

$$(6)$$

Where $E_{atis}$ expresses the error associated with an altitude determined from a barometric value obtained from a ground station. The barometric value is obtained, for example, from an Automated Terminal Information Service (ATIS) facility, that generally has an associated error value of approximately about 20 feet. A standard deviation expression corresponding to an altitude determination based upon radio altimetry is provided by the following expression:

$$\sigma_r=\mid E_{nst}\mid + [E_{sys}^2 + E_{atis}^2 + E_r^2 + E_{db}^2]^{1/2}$$

$$(7)$$

A monitoring module 28 is operable to compute the following deviation quantity for a GPS-determined altitude:

$$\Delta_{gps}(i)=A_{gps}(i) - A_{corr}(i) - (bias)_{gps}$$

$$(8)$$

Where $A_{gps}$ is the altitude determined for the flight vehicle using the GPS receiver 16 (FIGURE 1), and $A_{corr}$ corresponds to the corrected barometric altitude, obtained from the barometric altimeter system 20 (also shown in FIGURE 1). The $(bias)_{gps}$ quantity accounts for positional differences, such as the vertical distance between the GPS antenna installation and the static pressure ports on the flight vehicle. A similar deviation quantity may be determined for an attitude that is determined using the radio altimeter 18:

$$\Delta_r(i)=A_r(i) + A_{db}(i) - A_{corr}(i) - (bias)_r$$

$$(9)$$

Where $A_r$ corresponds to an altitude for the flight vehicle that is determined by the radio altimeter 18, and $A_{db}$ corresponds to an altitude that is determined by reference to the terrain database in the TAWS 12. The $(bias)_r$ value again corresponds to positional differences, and generally accounts for a difference in position between an antenna installation for the radio altimeter, and the static ports on the flight vehicle.
The deviations shown in expressions (8) and (9) are generally sampled at regular time intervals so that a plurality of values for the quantities $\Delta_{gps}(i)$ and $\Delta_r(i)$ may be determined. In other embodiments, the time intervals may be irregularly spaced. In any case, the plurality of values for the quantities $\Delta_{gps}(i)$ and $\Delta_r(i)$ are employed in a statistical test algorithm, which will be described subsequently.
A test statistic module 30 is also included in the processor 14. The test statistic module 30 is operable to generate a test statistic T, which is generally expressed as follows:

$$T =(1/\sigma)^2 \text{ x } \Sigma (\Delta(i))^2$$

$$(10)$$

Accordingly, for an altitude comparison between the barometric altitude and a GPS-derived altitude:

$$T_{gps} = (1/\sigma_{gps})^2 \times \Sigma (\Delta_{gps}(i))^2$$

$$(11)$$

Correspondingly, for an altitude comparison between the barometric altitude and radio altimeter-derived value, the following expression obtains:

$$T_r = (1/\sigma_t)^2 \times \Sigma (\Delta_r(i))^2$$

$$(12)$$

In the expressions (11) and (12), the summation proceeds from I = 1 to n, where n is the predetermined number of samples for the quantities $\Delta_{gps}(i)$ and $\Delta_r(i)$, respectively.

The $T_{gps}$ and $T_r$ values generated by expressions (11) and (12) may be compared in threshold check module 32 and compared to a predetermined value to determine if a threshold alarm state is generated within the threshold module 32. For example, the test statistic T may be assumed to have a chi-square distribution with n degrees of freedom. As a result, the threshold alarm state may be determined from a chi-square distribution table. If the degrees of freedom is assumed to be 25, and the probability is 0.00010, then a threshold value of about 67 is determined. Therefore, in the present case, if the test statistic T is greater than 67, an alarm signal is generated. If the test statistic T is less than, or equal to 67, no alarm signal is generated. If the alarm signal is generated, then an annunciator may be activated in the flight vehicle to alert the operator that a barometric altimeter discrepancy is detected. The annunciator may include aural and/or visual indication devices known in the art. Although the foregoing example assumes a chi-square distribution to test for statistical significance, other tests for statistical significance may also be used.

The processor 14 includes an altitude module 34 is operable to determine if the flight vehicle is above or below a predetermined transition altitude. For example, within the United States, the transition altitude is 18,000 feet MSL so that when the flight vehicle is operating above the transition altitude, the barometric altimeter system (FIGURE 1) is uniformly set to 29.92 inches of mercury (in. Hg). When the flight vehicle is operating below the transition altitude, the barometric altimeter system is set to a local barometric altimeter value that is generally provided to the flight vehicle by a ground facility, such as an Air Route Traffic Control Center (ARTCC), a Terminal Radar Approach Control Facility (TRACON), a Flight Service Station (FSS), a control tower, or other suitable ground facilities. Accordingly, if the flight vehicle is below the predetermined transition altitude, an alarm state in the threshold check module 32 is enabled. Correspondingly, if the flight vehicle is above the predetermined transition altitude, the alarm state in the threshold check module 32 is disabled. Alternately, in another particular embodiment, the threshold check module 32 is enabled when the flight vehicle is operating either above or below the transition altitude.

Although the foregoing discussion has disclosed the use of vertical navigation information obtained from the GPS receiver 16 (FIGURE 1), or alternately, the radio altimeter system 18 (FIGURE 1), it is understood that vertical navigation information may be obtained from the GPS receiver 16 and the radio altimeter system 18 and simultaneously processed in order to generate the alarm state in the threshold check module 32.

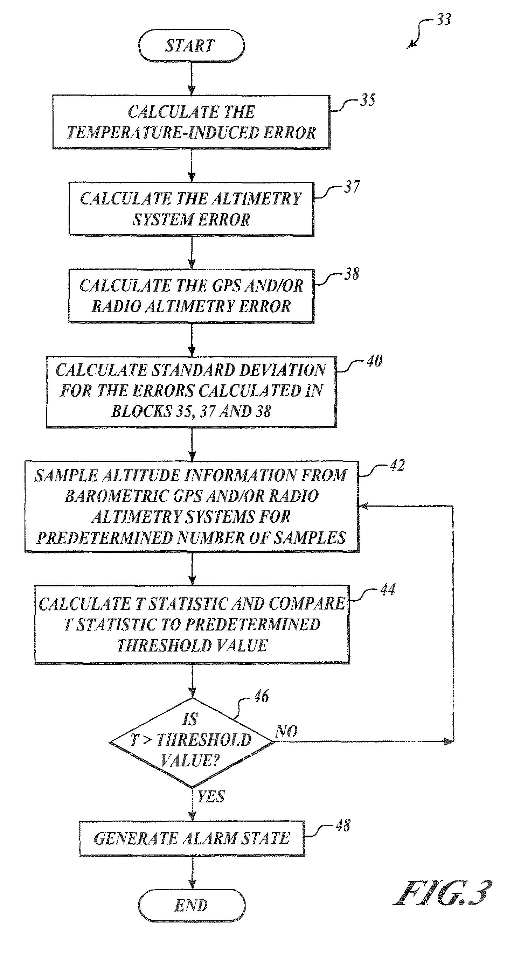

FIGURE 3 is a flowchart that will be used to describe a method 33 of monitoring an altitude of a flight vehicle, according to another embodiment of the invention. At block 35, the temperature-induced error is calculated according to expression (1) as discussed in conjunction with FIGURE 2. The altimetry system error may then be calculated according to expression (2), as also discussed in detail above. At block 38. the GPS error and the terrain database error, and/or an error associated with the radio altimeter is calculated according to the expressions (3), (4) and (5) above. As discussed more fully above, the GPS altitude and/or the radio altimeter altitude may be used to monitor the barometric setting. At block 40, the standard deviation values for the errors calculated in the blocks 35, 37 and 38 are calculated according to the expressions (6) and (7) above. At block 42, altitude information is sampled from the barometric altimeter system and from the GPS receiver and/or the radio altimeter system. The sampling may occur at regularly-spaced intervals, or they may occur at irregularly spaced intervals, and may include any desired number of samples. In one embodiment of the invention, however, at least about 25 altitude samples are acquired for processing. At block 44, the T statistic may be evaluated, according to the expressions (11) and (12) described above.

Still referring to FIGURE 3, the T statistic value may be compared to a predetermined reference (or threshold) value. In one specific embodiment of the invention, 25 samples are acquired, and the predetermined reference value is determined from a chi-square distribution table. For a probability of 0.00010, a reference value of about 67 is determined. At block 46, the T statistic is compared to the predetermined reference value. If the value for the T statistic is greater than the reference value, an alarm state is generated, so that a suitable annunciator may be activated, as shown in block 48. If the value for the T statistic is less than, or equivalent to the reference value, the method 33 returns to block 42.

While various embodiments of the invention have been illustrated and described, as noted above, many changes can be made without departing from the spirit and scope of the invention. Accordingly, the scope of the invention is not limited by the disclosure of the various embodiments. Instead, the invention should be determined entirely by reference to the claims that follow.

**Claims**

1. A system for monitoring an altitude in a flight vehicle, comprising:

   a barometric altimeter system operable to determine an altitude of the flight vehicle relative to a pressure datum that is adjustably selectable;
   at least one altitude determination system that is operable to determine an altitude of the flight vehicle without reference to the selected pressure datum; and
   a processor coupled to the barometric altimeter system and to the at least one altitude determination system that is operable to receive altitude information from the barometric altimeter system and the at least one altitude determination system and compare the respective altitude information to determine if an altitude discrepancy exists.

2. The system Claim 1, wherein the at least one altitude determination system further comprises a radio altimeter system.

3. The system of Claim 1, wherein the at least one altitude determination system further comprises a global positioning system (GPS) receiving device and the at least one altitude determination system further comprises a Terrain Awareness and Warning System (TAWS) that is configured to provide information for terrain in proximity to the flight vehicle.

4. The system of Claim 1, wherein the barometric altimeter system further comprises at least a static pressure sensor and a velocity sensor operably coupled to the flight vehicle and the barometric altimeter system further comprises at least one air data computer coupled to the static pressure sensor and the velocity sensor that is configured to generate at least a corrected barometric altitude,

5. The system of Claim 1, further comprising an alarm module coupled to the processor that is configured to generate at least one of an audible alarm and a visual alarm upon detection of the altitude discrepancy.

6. A method of monitoring an altitude of a flight vehicle, comprising:

   selectively adjusting a barometric altimeter system to define an altimeter setting that relates an altitude of the flight vehicle to a selected pressure datum;
   acquiring altitude information from at least one alternate altitude determination system that is operable to determine an altitude of the flight vehicle that is independent of the altimeter setting;
   assessing a difference between an altitude for the flight vehicle determined by the barometric altimeter system and an altitude determined by the at least one alternate altitude determination system; and
   if the difference is greater than a predetermined value, generating a suitable alarm signal.

7. The method of Claim 6, wherein acquiring altitude information from at least one alternate altitude determination system comprises determining an altitude from at least one of a GPS system, a radio altimeter system and a TAWS system.

8. The method of Claim 6, wherein assessing a difference between an altitude for the flight vehicle determined by the barometric altimeter system and an altitude determined by the at least one alternate altitude determination system further comprises calculating a selected measure of statistical significance and comparing the selected measure to the predetermined value and calculating a selected measure of statistical significance and comparing the selected measure to the predetermined value further comprises assuming that the predetermined value conforms to a chi-square distribution with a predetermined probability and a predetermined number of degrees of freedom.

9. The method of Claim 7, wherein assuming that the predetermined value conforms to a chi-square distribution with a predetermined probability and a predetermined number of degrees of freedom further comprises adopting a probability of approximately about 0.00010 and adopting a number of degrees of freedom of approximately about 25.

10. The method of Claim 6, wherein generating a suitable alarm message further comprises generating at least one of an audible alarm and a visual alarm.

FIG.1

$A_{press}$

$A_{corr}$

$\underset{\sim}{34}$

$\underset{\sim}{32}$ → ALARM

$A_{corr}$

$A_{corr}$

$\Delta h$

$\underset{\sim}{24}$ $e_{SYS}$

$\underset{\sim}{28}$ $\Delta(i)$ $\underset{\sim}{30}$ $T$

$h$

$\left\{ T = \frac{1}{\sigma^2} \sum_{i=1}^{n} (\Delta(i))^2 \right\}$

$\lambda$

$\Delta h$

$\underset{\sim}{22}$ $e_{NST}$

$\underset{\sim}{26}$ $\sigma$

$\Delta T_{STD}$

$T_0$

$E_{GPS}$

$E_{VFOM}$

$E_{db}$ $E_r$

FIG.2

10

*33*

START

CALCULATE THE TEMPERATURE-INDUCED ERROR —35

CALCULATE THE ALTIMETRY SYSTEM ERROR —37

CALCULATE THE GPS AND/OR RADIO ALTIMETRY ERROR —38

CALCULATE STANDARD DEVIATION FOR THE ERRORS CALCULATED IN BLOCKS 35, 37 AND 38 —40

SAMPLE ALTITUDE INFORMATION FROM BAROMETRIC GPS AND/OR RADIO ALTIMETRY SYSTEMS FOR PREDETERMINED NUMBER OF SAMPLES —42

CALCULATE T STATISTIC AND COMPARE T STATISTIC TO PREDETERMINED THRESHOLD VALUE —44

IS T > THRESHOLD VALUE? —46    NO

YES

GENERATE ALARM STATE —48

END

*FIG.3*